# EUROPEAN PATENT APPLICATION

(11) **EP 4 446 366 A1**
(43) Date of publication of application: **16.10.2024**
(21) Application number: 21966584.1
(22) Date of filing: 08.12.2021
(51) Int. Cl.: C08J 5/00

(54) **MOLDED ARTICLE USING PLANT MATERIAL AND PRODUCTION METHOD THEREOF**

(71) Applicant: Daicel Corporation, Osaka-shi, Osaka 530-0011 (JP); Kyoto University, Kyoto-shi, Kyoto 606-8501 (JP)
(72) Inventor: KITAYAMA, Kenji, Tokyo 108-8230 (JP); WATANABE, Takashi, Kyoto-shi, Kyoto 606-8501 (JP); HASHIZUME, Tomohiro, Tokyo 108-8230 (JP); KOBAYASHI, Naoko, Kyoto-shi, Kyoto 606-8501 (JP)
(74) Representative: Hoffmann Eitle
(86) International application number: PCT/JP2021/045148
(87) International publication number: WO 2023/105686

(57) **Abstract**

A molded article including a plant material is produced by a production method including: mixing a plant material containing lignocellulose with an organic acid; dissolving the plant material in the organic acid to produce a lignocellulose solution; and removing a liquid component from the lignocellulose solution to produce a solid content. This plant material is an unused portion of an agricultural crop. The molded article including a plant material contains lignocellulose derived from the plant material as a main component. This lignocellulose has a higher-order structure similar to the plant material. A laminate includes the molded article including the plant material and a sheet laminated on the molded article. The peel strength between the molded article and the sheet is 0.005 MPa or higher.

## Description

### Technical Field

The present invention relates to a molded article including a plant material and a method for producing the same. In particular, the present invention relates to a molded article including a plant material derived from an unused agricultural crop and a method for producing the same.

### Background Art

In recent years, there has been a demand for development of materials derived from biomass resources in place of materials derived from petroleum resources due to increased concern on environmental problems. On the other hand, there is a problem of a large amount of residues such as unused agricultural crops, for example, non-edible portions discarded at the time of harvesting agricultural crops. For example, a polyphenol called quercetin is contained in an outer skin (shell) discarded at the time of harvesting an onion. Quercetin has an antibacterial action, and thus, there is a problem that the outer skin is not decomposed even when it is buried in the ground.

Such unused agricultural crops are useful as biomass resources that do not compete with food. Furthermore, polyphenols also contained in large amounts in non-edible portions of agricultural crops have excellent physiological activities such as an antioxidative action and an anti-inflammatory action, and thus, effective utilization thereof is also demanded.

Patent Document 1 discloses a composting treatment method in which microorganisms are inoculated into household waste and animal and plant residues to proliferate, ferment, and decompose the household waste and animal and plant residues. Patent Document 2 discloses a method for treating an onion residue in which a squeezed coffee residue and an onion residue are mixed and subjected to a fermentation treatment. Patent Document 3 proposes a method for liquefying onion outer skin powder in which onion outer skins are pulverized to a particle size of 30 to 150 µm, dispersed in water, then adjusted to have weak acidity, and brought into contact with a glycolytic enzyme.

### Citation List

### Patent Document

Patent Document 1: JP 2008-37718 A
Patent Document 2: JP 2016-59880 A
Patent Document 3: JP 2007-312602 A

### Summary of Invention

### Technical Problem

A plant material contains a mixture of natural polymers called lignocellulose as a constituent of the cell wall. The lignocellulose forms a strong higher-order structure in which cellulose, hemicellulose, and lignin are intricately intertwined. Specifically, in the lignocellulose, celluloses, which are linear polymers, form crystal structures by intramolecular and intermolecular hydrogen bonds and constitute strong microfibrils, which are intertwined with hemicelluloses such as xylan and glucomannan; further, lignins, which are irregular aromatic polymers, fill voids in matrixes of these polysaccharides, thereby forming a strong composite. Therefore, the whole lignocellulose is not dissolved in a solvent such as water or an organic solvent under mild conditions. The dissolution of a material containing lignocellulose in these solvents requires a pretreatment for physically breaking down plant cell walls by a grinding treatment with a ball mill or the like or a pretreatment for separating cell wall components by a high-temperature reaction in a solvent containing a catalyst. A heavy load on energy and cost required for the grinding treatment or the high-temperature reaction has been a problem in utilization of a plant material such as unused agricultural crops.

The methods disclosed in Patent Documents 1 and 2 are applied only to fertilizer applications and require a long-time fermentation treatment. In addition, there remains a problem that a polyphenol as an active ingredient is not sufficiently utilized. The method disclosed in Patent Document 3 is a method in which the active ingredient of the onion outer skin is utilized, but carbohydrates such as lignocellulose, which is a main constituent of the outer skin, are decomposed and not utilized as lignocellulose.

An object of the present disclosure is to provide a molded article including a plant material obtained by utilizing an unused agricultural crop containing lignocellulose, and a method for producing the same.

### Solution to Problem

A molded article according to an embodiment of the present disclosure is produced by a production method including:
(1) mixing a plant material containing lignocellulose with an organic acid;
(2) dissolving the plant material in the organic acid to produce a lignocellulose solution; and
(3) removing a liquid component from the lignocellulose solution to produce a solid content. This plant material is an unused portion of an agricultural crop.

In the method for producing a molded article, the plant material may be an unused portion of a plant containing a sulfur compound. The plant containing a sulfur compound may be an Amaryllidaceae plant or an Asparagaceae plant. The plant containing a sulfur compound may be one or more selected from the group consisting of welsh onion, onion, garlic, shallot, Chinese chive, and asparagus.

In the method for producing a molded article, the solid content may be produced by bringing the lignocellulose solution into contact with an alcohol to perform solvent exchange.

The method for producing a molded article may further include shredding the plant material before mixing the plant material with the organic acid.

The method for producing a molded article may further include depressurizing or pressurizing the plant material before mixing the plant material with the organic acid. The method for producing a molded article may further include depressurizing or pressurizing the mixture produced by mixing the plant material and the organic acid.

In the method for producing a molded article, the organic acid may be an α-keto acid or a carboxylic acid having a formyl group. The organic acid may be one or more selected from the group consisting of formic acid, glyoxylic acid, and pyruvic acid.

The molded article including a plant material according to an embodiment of the present disclosure is produced by any of the above-described production methods.

From another viewpoint, the molded article including a plant material according to an embodiment of the present disclosure contains lignocellulose derived from the plant material as a main component. The lignocellulose forms a higher-order structure similar to lignocellulose in the plant material. The molded article may further contain a polyphenol derived from the plant material.

The molded article according to an embodiment of the present disclosure may be sheet-shaped or film-shaped. A laminate according to an embodiment of the present disclosure includes the sheet-shaped or film-shaped molded article and a sheet laminated on the molded article. A peel strength between the molded article and the sheet is 0.005 MPa or higher.

### Advantageous Effects of Invention

According to the production method of the present disclosure, it is possible to produce a molded article and a laminate having excellent mechanical properties such as strength by using a plant material without significantly impairing physical properties and structure of lignocellulose in the plant material. According to this production method, it is possible to effectively utilize unused portions of agricultural crops.

### Brief Description of Drawings

FIG. 1 provides photographs showing appearances of molded articles according an embodiment of the present disclosure.
FIG. 2 shows scanning electron microscope (SEM) images obtained on front and back surfaces of the molded articles of FIG. 1.
FIG. 3 is a photograph showing a laminate according to another embodiment of the present disclosure.

### Description of Embodiments

Hereinafter, an example of a preferred embodiment will be specifically described. Note that each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or greater and Y or less". Unless otherwise noted, all test temperatures are room temperature (20°C ± 5°C).

### Method for Producing Molded Article Including Plant Material

A method for producing a molded article including a plant material (hereinafter, sometimes referred to as a "molded article according to an embodiment of the present disclosure" or a "molded article") includes: (1) mixing a plant material containing lignocellulose with an organic acid; (2) dissolving the plant material in the organic acid to produce a lignocellulose solution; and (3) removing a liquid component from the lignocellulose solution to produce a solid content. This plant material is an unused portion of a plant containing a sulfur compound.

According to the production method according to an embodiment of the present disclosure, it is possible to effectively utilize an unused portion of a plant, which is discarded in the related art. In this production method, it is possible to produce a molded article including a plant material containing lignocellulose without requiring a fermentation treatment which requires a long time or a fine pulverization treatment which consumes a large amount of energy. According to this production method, physical properties and structure of lignocellulose in a plant material as a raw material are not impaired. As a result, a molded article having excellent mechanical properties such as strength can be obtained.

Hereinafter, details of each step will be described.

### Mixing Plant Material Containing Lignocellulose with Organic Acid

In the mixing, a plant material containing lignocellulose and an organic acid are mixed. Preferably, the plant material and the organic acid are uniformly mixed.

### Plant Material

In the production method according to an embodiment of the present disclosure, the plant material containing lignocellulose is an unused portion of an agricultural crop. The type of the agricultural crop is not particularly limited as long as it contains lignocellulose, and unused portions of various agricultural crops discarded at the time of harvesting or the like are appropriately selected and used. All portions of agricultural crops that are not used because their shapes and the like are below standards may be used as the plant material.

In this production method, the agricultural crop may be a stalk vegetable, a root vegetable, a fruit vegetable, or a leaf vegetable. Two or more types of agricultural crops may be used in combination. The unused portion of the agricultural crop is also not limited, and may be an outer skin, an outer leaf, a root, a stem, or the like of various agricultural crops.

From the viewpoint of containing a useful plant component, it is preferable to use an unused portion of a plant containing a sulfur compound as the plant material. Examples of the sulfur compound include allicin, alliin, sulforaphane, isothiocyanate, and allyl sulfide. A plant containing allicin or alliin is preferred.

Examples of other useful plant components include: polyphenols such as quercetin, catechin, isoflavone, resveratrol, caffeic acid, and curcumin; carotenoids such as carotene, lycopene, lutein, and astaxanthin; and terpenes such as limonene and menthol.

Examples of plants containing a useful plant component include an Amaryllidaceae plant, an Asparagaceae plant, and a Solanaceae plant. Examples of the plant containing a sulfur compound include an Amaryllidaceae plant and an Asparagaceae plant. Examples of the Amaryllidaceae plant include welsh onion, onion, garlic, shallot, and Chinese chive. Examples of the Asparagaceae plant include asparagus. Examples of the Solanaceae plant include eggplant, tomato, green pepper, Shishito pepper, and capsicum. The preferred plant containing a sulfur compound is one or more selected from the group consisting of welsh onion, onion, garlic, shallot, Chinese chive, and asparagus. An unused portion of an onion, which contains a large amount of useful plant components and is discarded in a large amount as waste, for example, the outer skin of the onion is suitably used as the plant material.

### Organic Acid

The organic acid that can be used in the mixing is not particularly limited, and an organic acid that can dissolve the plant material containing lignocellulose can be selected and used. Preferably, an organic acid is used which allow visual confirmation of disappearance of the shape of the plant material in a case where 20 ml of the organic acid is added to and mixed with 200 mg of the plant material containing lignocellulose, pressurized or depressurized, and then stirred.

A representative organic acid used in the production method according to an embodiment of the present disclosure is a carboxylic acid. The carboxylic acid may be an aliphatic carboxylic acid or an aromatic carboxylic acid. From the viewpoint of excellent solubility of the plant material, an α-keto acid and a carboxylic acid having a formyl group are preferable, and an organic acid selected from the group consisting of formic acid, glyoxylic acid, and pyruvic acid is particularly preferable.

An amount of the organic acid added is appropriately selected depending on the type and shape of the plant material, the type of the organic acid, and the like. From the viewpoint of improving a dissolution efficiency, the amount of the organic acid added is preferably 4 parts by weight or more and more preferably 9 parts by weight or more relative to 1 part by weight of the plant material. From the viewpoint that the molded article described below is easily obtained, the amount of the organic acid added is preferably 200 parts by weight or less and more preferably 49 parts by weight or less relative to 1 part by weight of the plant material. The amount of the organic acid relative to 1 part by weight of the plant material may be from 4 to 200 parts by weight, from 4 to 49 parts by weight, from 9 to 200 parts by weight, or from 9 to 49 parts by weight.

The method of adding the organic acid to the plant material is not particularly limited. The organic acid may be added to the plant material as it is, or may be added as an organic acid solution in which the organic acid is dissolved in a good solvent. The solvent is not particularly limited as long as it can dissolve the organic acid. From the viewpoint of low environmental load, lower alcohols such as methanol and ethanol, and water are preferable, and water is more preferable.

### Dissolving Plant Material in Organic Acid to Produce Lignocellulose Solution

In the dissolution, a solution containing lignocellulose is produced by dissolving the plant material containing lignocellulose in the organic acid.

In the dissolution, the entire plant material containing lignocellulose may be dissolved in the organic acid, or the plant material may be partially dissolved in the organic acid. In the case of partial dissolution, the lignocellulose solution is produced by removing a residue by filtration or the like. Note that in the present specification, "dissolved" means a state in which the shape of the plant material in the organic acid cannot be visually recognized. Even in a case where fibrous materials derived from lignocellulose are observed in the solution by microscopic observation or the like, the case where the shape of the added plant material itself has disappeared is defined as "dissolved". Thus, the lignocellulose solution obtained in the dissolution may contain an insoluble content which cannot be visually recognized with the naked eye. The solution may further contain a plant component derived from the plant material.

As long as the lignocellulose solution is obtained, the dissolution method and dissolution conditions in the dissolution are not particularly limited, and are appropriately selected depending on the type and shape of the plant material, the type of the organic acid, and the like. From the viewpoint of high dissolution efficiency, a dissolution temperature is preferably 20°C or higher, and more preferably 30°C or higher. From the viewpoint of energy reduction, a preferable dissolution temperature is 100°C or lower.

From the viewpoint of promoting the dissolution of the plant material, a stirring treatment may be performed, or a stirring treatment accompanied by pulverization may be performed. The stirring treatment accompanied by pulverization in the organic acid makes it possible to dissolve the plant material under milder conditions. In other words, the production method according to an embodiment of the present disclosure includes stirring while pulverizing the plant material in the organic acid for dissolution. The stirring treatment accompanied by pulverization may be continued until the lignocellulose solution is obtained, or the stirring treatment accompanied by pulverization may be performed for a predetermined time, and then shifted to a stirring treatment not accompanied by pulverization. Examples of an apparatus for the stirring treatment accompanied by pulverization include a bead mill, a colloid mill, a disk refiner, and a conical refiner.

### Metal Salt

In the production method according to an embodiment of the present disclosure, at the time of dissolving the plant material, a metal salt represented by a general formula M^{a}M^{b}(SO₄)₂, where M^{a} is a trivalent metal, and M^{b} is NH₄ or a monovalent metal, is used in combination with the organic acid. The metal salt represented by this general formula is a double salt also referred to as "alum". It may be a hydrate of a metal salt. The combined use of the organic acid and alum improves the solubility of the plant material.

Specific examples of the trivalent metal include aluminum, iron, and chromium. Specific examples of the monovalent metal include sodium and potassium. A preferable metal salt is aluminum potassium sulfate. Aluminum potassium sulfate dodecahydrate may be used as the metal salt.

From the viewpoint of remarkable effect of combined use of the metal salt with the organic acid, an amount of the metal salt added is preferably 1 part by weight or more, more preferably 2 parts by weight or more, and even more preferably 5 parts by weight or more, relative to 100 parts by weight of the plant material. From the viewpoint that a solution or molded article having a high lignocellulose content is obtained, the amount of the metal salt added is preferably 30 parts by weight or less, more preferably 25 parts by weight or less, and even more preferably 20 parts by weight or less.

### Lignocellulose Solution

The lignocellulose solution produced by the production method according to an embodiment of the present disclosure contains lignocellulose derived from the plant material. A concentration of the total solid content dissolved in the lignocellulose solution is preferably 0.5 wt.% or more, and more preferably 2.0 wt.% or more. From the viewpoint of ease of production, the concentration of the lignocellulose solution is preferably 20 wt.% or less, and more preferably 10 wt.% or less. The concentration of the lignocellulose solution may be from 0.5 to 20 wt.%, from 0.5 to 10 wt.%, from 2.0 to 20 wt.%, or from 2.0 to 10 wt.%.

As long as the effects of the present disclosure can be obtained, the lignocellulose solution may contain a metal salt represented by the general formula M^{a}M^{b}(SO₄)₂, where M^{a} is a trivalent metal, and M^{b} is NH₄ or a monovalent metal. Examples of the metal salt include metal salts described above. A preferable metal salt is aluminum potassium sulfate. An amount of the metal salt in the lignocellulose solution is preferably 1 part by weight or more, more preferably 2 parts by weight or more, and even more preferably 5 parts by weight or more, relative to 100 parts by weight of the plant material as a raw material. The amount of the metal salt is preferably 30 parts by weight or less, more preferably 25 parts by weight or less, and even more preferably 20 parts by weight or less. The lignocellulose solution may further contain a known additive such as a dye.

### Separating Solvent from Lignocellulose Solution to Produce Solid Content

In the separation, a liquid component is removed from the lignocellulose solution produced by dissolving the plant material in the organic acid to produce a solid content. This liquid component is mainly the organic acid or the organic acid solution used in the mixing and the dissolution, and may contain a liquid plant component in the plant material. Main components of the solid content obtained in the separation are lignocellulose derived from the plant material and a solid plant component. In the production method according to an embodiment of the present disclosure, the solid content obtained in the separation may be used as a molded article which is a final product, or the solid content may be processed into a desired shape to be used as a molded article.

The method for removing the liquid component from the lignocellulose solution is not particularly limited as long as the effects of the present disclosure are obtained. For example, the lignocellulose solution may be subjected to a drying treatment to remove the liquid component. Drying conditions of the lignocellulose solution are not particularly limited. From the viewpoint of avoiding thermal decomposition of the plant component, the drying temperature is preferably 40°C or lower, and more preferably 30°C or lower. From the viewpoint of drying efficiency, a preferred drying temperature is 20°C or higher. From the viewpoint that drying at a lower temperature is possible, drying under reduced pressure or vacuum drying is suitably used. The drying time is appropriately adjusted depending on an amount of the lignocellulose solution and the drying temperature.

### Subjecting Lignocellulose Solution to Solvent Exchange

The production method according to an embodiment of the present disclosure may further include bringing the lignocellulose solution into contact with an alcohol to perform solvent exchange between the liquid component and the alcohol. The lignocellulose solution may be subjected to solvent exchange and then dried to obtain a solid content containing the plant material. The solvent exchange before drying improves drying efficiency. For example, solvent exchange may be performed by casting the lignocellulose solution in a container having a predetermined shape, and then pouring an alcohol onto the surface of the cast lignocellulose solution to bring them into contact with each other for a certain period of time.

The type of the alcohol is not particularly limited as long as solvent exchange for the liquid component containing the organic acid is possible. From the viewpoint of low environmental load, a lower alcohol such as methanol or ethanol is preferably used. Solvent exchange may be performed using a mixed solvent of an alcohol and water. In a case where the mixed solvent is used, the mixing ratio between the alcohol and water is appropriately adjusted depending on the concentration of the lignocellulose solution, the type of the organic acid, and the like.

The temperature condition in the case of solvent exchange is not particularly limited, and is preferably 10°C or higher, and more preferably 20°C or higher from the viewpoint of improvement in exchange efficiency. From the viewpoint of suppressing thermal degradation, the temperature is preferably 40°C. or lower.

### Shredding Plant Material

The production method according to an embodiment of the present disclosure may further include shredding the plant material before mixing the plant material and the organic acid. The shredded plant material is easy to mix uniformly with the organic acid, resulting in improved dissolution efficiency.

The method of shredding the plant material is not particularly limited, and a cutter, a chipper, a hammer mill, a roller mill, a cutter mill, a hammer crusher, a Wiley mill, or the like is appropriately selected and used. Two or more types of the shredding methods may be used in combination. Note that in the production method according to an embodiment of the present disclosure, from the viewpoint that the structure of lignocellulose in the plant material is not largely destroyed, a fine pulverization treatment for pulverizing to the micron order is not necessary.

According to the production method according to an embodiment of the present disclosure that does not require the fine pulverization treatment, structural destruction of lignocellulose in the plant material does not occur. Accordingly, also in the obtained molded article, high strength and high toughness due to the higher-order structure of lignocellulose, crystallinity of cellulose constituting lignocellulose, an antibacterial property, an ultraviolet absorbing property, and the like peculiar to lignin can be maintained.

### Adjusting Pressure of Plant Material

The production method according to an embodiment of the present disclosure may include pressurizing or depressurizing the plant material before mixing the plant material and the organic acid, or may include pressurizing or depressurizing a mixture obtained by mixing the plant material and the organic acid. In a case where the plant material is shredded before mixing with the organic acid, the plant material before shredding may be pressurized or depressurized, or the plant material after shredding may be pressurized or depressurized.

It is presumed that, in this pressure adjustment, a variation in pressure applied to the plant material relaxes the strong higher-order structure of lignocellulose and further improves the solubility in the organic acid. From the viewpoint that the organic acid is efficiently introduced into the tissue of the plant material by the pressure variation, it is more preferable to increase or reduce pressure after adding the organic acid to the plant material or to increase or reduce pressure after adding the organic acid to the shredded plant material.

In a case where the pressure is reduced, the pressure is preferably reduced in a range of 1.0 kPa or higher and 10.0 kPa or lower (absolute pressure). In addition, in a case where the pressure is increased, the pressure is preferably increased in a range of 200 kPa or higher to 1000 kPa or lower (gauge pressure). Note that in the present specification, the absolute pressure is used in a case where the pressure is lower than the atmospheric pressure by a depressurization treatment, and the gauge pressure based on the atmospheric pressure is used in a case where the pressure is higher than the atmospheric pressure by a pressurization treatment.

In the production method according to an embodiment of the present disclosure, a means for reducing pressure or increasing pressure is not particularly limited. The pressure may be adjusted to the above-described range by a known means such as an aspirator, an ejector, a compressor, or a mechanical pump.

### Molded Article Including Plant Material

The molded article according to an embodiment of the present disclosure can be produced by the above-described production method using the plant material. The molded article contains the solid content obtained by removing the liquid component from the lignocellulose solution. In other words, the molded article contains lignocellulose derived from the plant material as a main component. In the present specification, the "main component" means a component whose content is at least 50 wt.% or more. A content of lignocellulose in the lignocellulose-containing molded article is at least 50 wt.% or more, preferably 60 wt.% or more, more preferably 80 wt.% or more, and even more preferably 90 wt.% or more, and the upper limit value is 100 wt.%.

In the molded article according to an embodiment of the present disclosure, the higher-order structure possessed by lignocellulose in the plant material as a raw material is formed. It is believed that this higher-order structure imparts excellent mechanical properties to the molded article. This molded article may contain a fibrous material derived from lignocellulose. The presence of the fibrous material can be confirmed by scanning electron microscopic observation.

The molded article according to an embodiment of the present disclosure may contain a plant component derived from the plant material. The type of the plant component is not particularly limited, and representative plant components are polyphenols. Examples of the polyphenols include: flavonoids such as quercetin, catechin, and isoflavone; phenylpropanoids such as resveratrol, caffeic acid, and curcumin; and anthraquinones such as emodin. The molded article may further contain a known additive such as a dye as long as the effects of the present disclosure are not inhibited.

The molded article according to an embodiment of the present disclosure may have a functional group derived from the organic acid. Examples of the organic acid include organic acids described above for the dissolution of the plant material. Examples of the functional group derived from the organic acid include a formyl group and a carboxyl group. The functional group derived from the organic acid in the molded article is detected by an infrared absorption spectrum obtained by absorption spectrometry of the molded article formed into a thin film.

The molded article according to an embodiment of the present disclosure may contain a metal salt represented by the general formula M^{a}M^{b}(SO₄)₂, where M^{a} is a trivalent metal, and M^{b} is NH₄ or a monovalent metal. Examples of the metal salt include metal salts described above for the dissolution of the plant material. A content of the metal salt in the molded article is preferably 1 part by weight or more, and more preferably 5 parts by weight or more, relative to 100 parts by weight of the molded article. The content of the metal salt is preferably 20 parts by weight or less.

A specific gravity of the molded article according to an embodiment of the present disclosure is less than 1.2 g/cm³, preferably 1.15 g/cm³ or less, and more preferably 1.1 g/cm³ or less. From the viewpoint of excellent mechanical strength, the specific gravity of the molded article is preferably 0.2 g/cm³ or more, and more preferably 0.3 g/cm³ or more. The specific gravity is measured in accordance with JIS Z 8807 "Methods of measuring density and specific gravity of solid".

From the viewpoint of obtaining high heat resistance, a glass transition temperature Tg of the molded article according to an embodiment of the present disclosure is preferably 200°C or higher, more preferably 210°C or higher, and even more preferably 220°C or higher. The upper limit value is not particularly limited, and the glass transition temperature Tg is preferably 280°C or lower. The glass transition temperature of the molded article is measured using a dynamic viscoelasticity analyzer (trade name "RSA G2" available from TA instruments) under conditions of a temperature range of -90 to 200°C, a rate of temperature increase of 3°C/min, an applied strain of 0. 1%, and a frequency of 1 Hz in a nitrogen atmosphere.

A tensile property of the molded article according to an embodiment of the present disclosure is appropriately set depending on the application and shape thereof, and, from the viewpoint of easy deformation, an elastic modulus of the molded article is preferably 50 MPa or greater, and more preferably 1000 MPa or greater. From the viewpoint of durability, the preferred elastic modulus is 4000 MPa or less. From the viewpoint of durability, a stress at break of the molded article is preferably 0.5 MPa or higher, more preferably 5.0 MPa or greater, even more preferably 10 MPa or greater, and particularly preferably 20 MPa or greater. From the viewpoint of easy deformation, the stress at break is preferably 80 MPa or less. From the viewpoint of easy deformation, a strain of the molded article is preferably 0.2% or greater, and more preferably 0.5% or greater. From the viewpoint of durability, the strain is preferably 5.0% or less. The elastic modulus, stress at break, and strain of the molded article according to an embodiment of the present disclosure were measured by a tensile test (tensile speed: 10 mm/min, distance between grips: 50 mm) using a tensile tester (trade name "Universal Tensile Tester (Tensilon) RTG-1310" available from A&D Company, Limited) in accordance with the provisions of ISO527-1.

The shape and the like of the molded article according to an embodiment of the present disclosure are not particularly limited, and may be powdery, pellet form, fibrous, film-shaped, or sheet-shaped. The solid content obtained by removing the liquid component from the lignocellulose solution may have such a shape, or the solid content may be molded by a known method to have such a shape.

A sheet-shaped or film-shaped molded article is suitably used. The sheet-shaped and film-shaped molded articles are produced, for example, by a production method including casting the lignocellulose solution on a substrate and drying the lignocellulose-containing solution on the substrate.

The fibrous molded article can be produced, for example, by a wet spinning method in which the lignocellulose solution is extruded through a nozzle into a coagulating liquid. This molded article may be a filament, a staple, or a staple yarn.

### Laminate

The laminate according to an embodiment of the present disclosure includes a sheet-shaped or film-shaped molded article using the plant material and a sheet laminated on the molded article. A peel strength between the molded article and the sheet is 0.005 MPa or higher. From the viewpoint of improvement in durability, the peel strength is preferably as high as possible, and may be 0.008 MPa or greater, or 0.010 MPa or greater. The peel strength of the laminate is measured in accordance with a sandwich method described in JIS K5600-5-7 "Testing methods for paints - Part 5: Mechanical property of film - Section 7: Adhesion test (Pull-off method)". Specifically, two test cylinders (diameter of 20 mm) are bonded to each other using an adhesive to sandwich one test piece, and then the test cylinders are pulled in a direction perpendicular to the bonded surface (in the axial direction of the test cylinder) using a tensile tester ("EZ-TEST 100N" available from Shimadzu Corporation) to measure a strength when the test piece is peeled off. Each test piece is tested at least five times, and the average value thereof is determined as the peel strength (MPa).

The material of the sheet included in the laminate according to an embodiment of the present disclosure is not particularly limited, and can be appropriately selected according to the application. For example, the material of the sheet may be a thermoplastic resin or a thermosetting resin. Examples of the thermoplastic resin include polyethylene, polypropylene, polystyrene, an acrylonitrile/butadiene/styrene resin, polyvinyl chloride, a methacrylic resin, polyamide, polycarbonate, polyethylene terephthalate, polybutylene terephthalate, polyimide, polysulfone, polyether sulfone, and polytetrafluoroethylene. Examples of the thermosetting resin include an epoxy resin, polyurethane, unsaturated polyester, and a phenol resin.

The laminate according to an embodiment of the present disclosure is produced by, for example, using the sheet made of the above-described material as a substrate and drying the lignocellulose solution cast on the substrate. The drying method and drying conditions are appropriately adjusted depending on the type of the plant material, the concentration of the lignocellulose solution, the material of the sheet, and the like.

The molded article according to an embodiment of the present disclosure is, in other words, a molded article having physical properties resulting from the plant material as a raw material and containing the plant material as a main component. The molded article can have physical properties of cellulose, hemicellulose, and lignin. The molded article and the laminate including the molded article can be applied to fields such as medical care, clothes, housing equipment, and the like as films, fibers, wallpaper and the like required to have functions such as antibacterial property, ultraviolet absorption property, metal adsorption ability, and the like.

### Examples

The effects of the present disclosure will be clarified by specific experimental examples below, but the present disclosure should not be construed as being limited based on the description of the experimental examples.

### Dissolution Test

### Experimental Example 1

As the plant material, an outer skin of an onion was prepared. The outer skin was shredded by hand into small pieces of about 1 mm square. Into a vial having a capacity of 50 ml, 400 mg of the obtained small pieces were charged, and 30 ml of formic acid having a concentration of 80 wt.% (available from Nacalai Tesque, Inc.) was added thereto under a nitrogen gas atmosphere. The mixture was heated to 40°C while stirring using a magnetic stirrer. After 10 days at 40°C with stirring, a lignocellulose solution of Experimental Example 1 was obtained. The obtained solution was visually observed to confirm that all of the added small pieces had disappeared. The result is listed in Table 1 below as "Dissolution residue: No".

### Experimental Examples 2 to 6

The dissolution test of Experimental Examples 2 to 6 was conducted in the same manner as in Experimental Example 1 except that the amount of onion outer skin and the type and amount of the organic acid were changed to those listed in Table 1 below. As listed in Table 2 below, in Experimental Example 3, the presence of a small amount of dissolution residue was confirmed after stirring at 40°C for 10 days. In the lignocellulose solutions of Experimental Examples 2 and 4 to 6, it was visually confirmed that all of the added small pieces had disappeared.

**Table 1**

| (Table 1) Dissolution test | | | | | | |
|---|---|---|---|---|---|---|
| | Experimental Example 1 | Experimental Example 2 | Experimental Example 3 | Experimental Example 4 | Experimental Example 5 | Experimental Example 6 |
| Onion outer skin | 400 mg | 200 mg | 200 mg | 200 mg | 200 mg | 200 mg |
| Organic acid/organic acid solution | 80% formic acid | 80% formic acid | Acetic Acid | Glyoxylic acid | Pyruvic acid | 50% glyoxylic acid |
| Added amount | 30 ml | 20 ml | 20 ml | 20 g | 20 ml | 20 ml |
| Dissolution residue | No | No | Yes | No | No | No |

The details of compounds listed in Table 1 are as follows.
80% Formic acid: available from Nacalai Tesque, Inc., concentration 80%
Acetic acid: available from FUJIFILM Wako Pure Chemical Industries, Ltd., concentration 100%
Glyoxylic acid: available from Sigma-Aldrich, concentration 100%
Pyruvic acid: available from Tokyo Chemical Industry Co., Ltd., concentration 100%
50% Glyoxylic acid: available from Tokyo Chemical Industry Co., Ltd., concentration 50%

### Film Formation Test 1

### Experimental Example 7

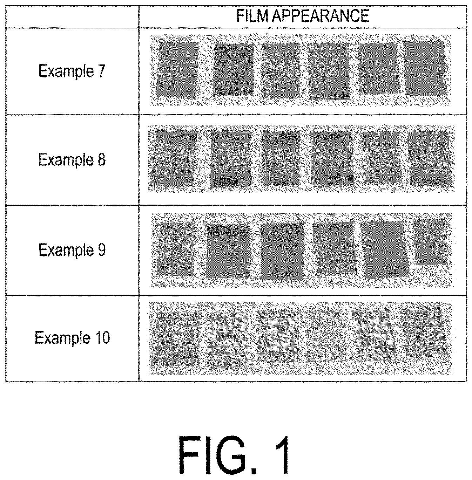

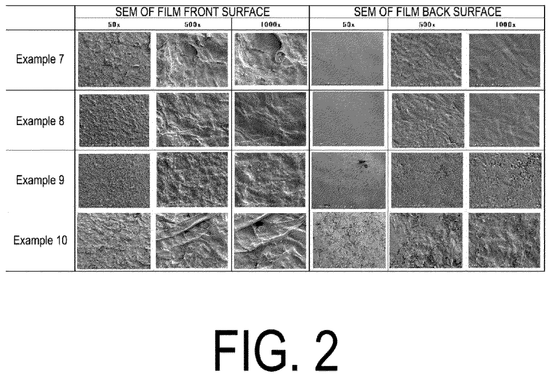

An outer skin of an onion as the plant material was shredded by hand into small pieces of about 1 mm square. Into a vial having a capacity of 50 ml, 400 mg of the obtained small pieces were charged, and 20 ml of formic acid having a concentration of 80 wt.% (available from Nacalai Tesque, Inc.) was added thereto under a nitrogen gas atmosphere. After 7 days at 40°C with stirring, it was visually confirmed that the added small pieces had disappeared, whereby a lignocellulose solution of Experimental Example 7 was obtained. This lignocellulose solution was cast on an oriented polypropylene sheet (OPP sheet), and then allowed to stand overnight in a culture dish with a lid at room temperature to obtain a sheet-shaped molded article. Appearance photographs and scanning electron microscope (SEM) images (front surface and back surface) of the sheet-shaped molded article obtained in Experimental Example 7 are shown in FIGS. 1 and 2, respectively. Note that the SEM images were captured at 50 magnification (50x), 500 magnification (500x), and 1000 magnification (1000x). Physical properties (specific gravity (g/cm³), elastic modulus (MPa), stress at break (MPa), and strain (%)) of the obtained sheet-shaped molded article were evaluated by the above-described methods, and the results thereof are listed in Table 2 below.

### Experimental Examples 8 to 10

Film formation tests of Experimental Examples 8 to 10 were conducted in the same manner as in Experimental Example 7 except that the type of the plant material and the dissolution conditions were changed to those shown in Table 2 below and the following operation was carried out at the time of dissolution to obtain sheet-shaped molded articles. In Experimental Examples 8 to 10, after stirring at 40°C for 7 days, the dissolution residue was pulverized using a pestle and a mortar, and then further stirred at 40°C for 2 days. In each case, it was visually confirmed that all of the added small pieces had disappeared. Appearance photographs and scanning electron microscope (SEM) images (front surface and back surface) of the sheet-shaped molded articles obtained in Experimental Examples 8 to 10 are shown in FIGS. 1 and 2, respectively. Physical properties (specific gravities (g/cm3), elastic modulus (MPa), stress at break (MPa), and strain (%)) of the sheet-shaped molded articles of Experimental Examples 8 to 10 were evaluated by the above-described methods, and the results thereof are listed in Table 2 below.

**Table 2**

| (Table 2) Film Formation Test 1 (casting) | | | | |
|---|---|---|---|---|
| | Experimental Example 7 | Experimental Example 8 | Experimental Example 9 | Experimental Example 10 |
| Plant material | Onion outer skin | Onion top and bottom | Tomato leaf | Tomato stem |
| Dissolution amount | 400 mg | 400 mg | 400 mg | 400 mg |
| Organic acid/organic acid solution | 80% formic acid | 80% formic acid | 80% formic acid | 80% formic acid |
| Added amount | 20 ml | 20 ml | 20 ml | 20 ml |
| Dissolution condition | 40°C/7 days | 40°C/9 days | 40°C/9 days | 40°C/9 days |
| Specific gravity [g/cm³] | 0.69 | 0.86 | 0.90 | 0.67 |
| Elastic modulus [MPa] | 3680 | 790 | 1960 | 2320 |
| Stress at break [MPa] | 38.3 | 22.1 | 6.8 | 22.0 |
| Strain [%] | 1.20 | 2.77 | 0.31 | 1.06 |

### Film Formation Test 2

### Experimental Example 11

An outer skin of an onion as the plant material was shredded by hand into small pieces of about 1 mm square. Into a vial having a capacity of 50 ml, 200 mg of the obtained small pieces were charged, and 20 g of glyoxylic acid (available from Sigma-Aldrich) was added thereto under an air atmosphere. After 7 days at 40°C with stirring, it was visually confirmed that the added small pieces had disappeared, whereby a lignocellulose solution of Experimental Example 11 was obtained. This lignocellulose solution was cast on a culture dish, and then methanol (available from Fujifilm Wako Pure Chemical Industries, Ltd.) was poured into the culture dish. The mixture was allowed to stand overnight at room temperature for solvent exchange, and then peeled off from the culture dish to obtain a sheet-shaped molded article.

### Experimental Examples 12 to 14

Film formation tests of Experimental Examples 12 to 14 were conducted in the same manner as in Experimental Example 11 except that the type of the organic acid and the solvent for exchange were changed to those listed in Table 3 below. In Experimental Example 13 in which methanol was used as the solvent for exchange, a sheet-shaped molded article was obtained by peeling off the molded article from the culture dish after drying in the same manner as in Experimental Example 11. In Experimental Examples 12 and 14 in which water was used as the solvent for exchange, it was confirmed that the adhesion between the sheet-shaped molded article after drying and the culture dish was strong and the sheet-shaped molded article was hardly peeled off.

**[Table 3]**

| (Table 3) Film Formation Test 2 (casting after solvent exchange) | | | | |
|---|---|---|---|---|
| | Experimental Example 11 | Experimental Example 12 | Experimental Example 13 | Experimental Example 14 |
| Onion outer skin | 200 mg | 200 mg | 200 mg | 200 mg |
| Organic Acid | Glyoxylic acid | Glyoxylic acid | Pyruvic acid | Pyruvic acid |
| Added amount | 20 g | 20 g | 20 ml | 20 ml |
| Solvent for exchange | Methanol | Water | Methanol | Water |

### Production of Laminate

### Experimental Example 15

An outer skin of an onion as the plant material was mixed with 80% formic acid (available from Nacalai Tesque, Inc.) and stirred at 50°C for 8 days to obtain a lignocellulose solution having a concentration of 3.5 wt.%. The lignocellulose solution was cast on a polyethylene terephthalate (PET) film (thickness of 38 µm) placed on a glass substrate, and then dried at 80°C to obtain a laminate 1 having a sheet-shaped molded article including the plant material and a PET film.

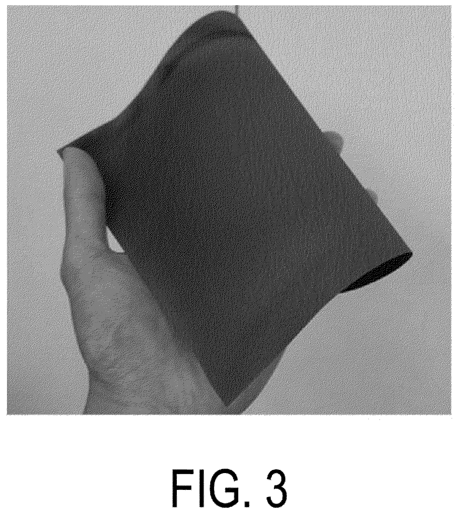

Next, the obtained laminate 1 was turned over and placed on a glass substrate in such a manner that the PET film is an upper surface, and then the lignocellulose solution was further cast thereon and dried at 80°C to obtain a laminate 2 in which the sheet-shaped molded article including the plant material was laminated on both surfaces of the PET film. An appearance of the laminate 2 is shown in FIG. 3. The peel strength of the laminate of Experimental Example 15 measured by the above-described method was 0.020 MPa (average value by 6-point measurement).

### (Conclusion)

As shown in Experimental Examples 1 to 15, according to the production method of an embodiment of the present disclosure, it is possible to obtain a molded article and a laminate having excellent mechanical properties such as strength and high utility value without using a chemical having a large environmental load and without significantly impairing the physical properties and structure of lignocellulose in the plant material. According to this production method, unused portions of agricultural crops can be effectively utilized. From the above evaluation results, the superiority of the present disclosure is clear. The production method according to an embodiment of the present disclosure can be applied to effective utilization of various unused crops.

## Claims

1. A method for producing a molded article, the method comprising:
mixing a plant material containing lignocellulose with an organic acid;
dissolving the plant material in the organic acid to produce a lignocellulose solution; and
removing a liquid component from the lignocellulose solution to produce a solid content, wherein
the plant material is an unused portion of an agricultural crop.

2. The method for producing a molded article according to claim 1, wherein the plant material is an unused portion of a plant containing a sulfur compound.

3. The method for producing a molded article according to claim 2, wherein the plant containing a sulfur compound is an Amaryllidaceae plant or an Asparagaceae plant.

4. The method for producing a molded article according to claim 2 or 3, wherein the plant containing a sulfur compound is one or more selected from the group consisting of welsh onion, onion, garlic, shallot, Chinese chive, and asparagus.

5. The method for producing a molded article according to any one of claims 1 to 4, further comprising bringing the lignocellulose solution into contact with an alcohol to perform solvent exchange.

6. The method for producing a molded article according to any one of claims 1 to 5, further comprising shredding the plant material before mixing with the organic acid.

7. The method for producing a molded article according to any one of claims 1 to 6, further comprising depressurizing or pressurizing the plant material before mixing with the organic acid.

8. The method for producing a molded article according to any one of claims 1 to 7, further comprising depressurizing or pressurizing a mixture produced by mixing the organic acid and the plant material.

9. The method for producing a molded article according to any one of claims 1 to 8, wherein the organic acid is an α-keto acid or a carboxylic acid having a formyl group.

10. The method for producing a molded article according to any one of claims 1 to 9, wherein the organic acid is selected from the group consisting of formic acid, glyoxylic acid, and pyruvic acid.

11. A molded article produced by the production method described in any one of claims 1 to 10.

12. A molded article comprising a plant material, the molded article comprising
lignocellulose derived from the plant material as a main component, and
having a higher-order structure similar to lignocellulose in the plant material.

13. The molded article comprising the plant material according to claim 12, further comprising a polyphenol derived from the plant material.

14. The molded article comprising the plant material according to claim 12 or 13, wherein the molded article is sheet-shaped or film-shaped.

15. A laminate comprising: the molded article comprising the plant material described in claim 14; and a sheet laminated on the molded article, wherein
a peel strength between the molded article and the sheet is 0.005 MPa or higher.
